Europäisches Patentamt

European Patent Office

Office européen des brevets

(11) Publication number: **0 122 270**
**B1**

(12) EUROPEAN PATENT SPECIFICATION

(45) Date of publication of patent specification: **04.04.90**

(51) Int. Cl.⁵: **B 07 B 1/40**

(21) Application number: **83903160.6**

(22) Date of filing: **17.10.83**

(86) International application number:
**PCT/AU83/00152**

(87) International publication number:
**WO 84/01527 26.04.84 Gazette 84/11**

(60) **Divisional application 88202264.3 filed on 17/10/83.**

(54) SEPARATION OF MULTI-PHASE SYSTEMS.

(30) Priority: **15.10.82 AU 6367/82**

(43) Date of publication of application:
**24.10.84 Bulletin 84/43**

(45) Publication of the grant of the patent:
**04.04.90 Bulletin 90/14**

(84) Designated Contracting States:
**AT DE FR GB SE**

(56) References cited:
**AU-B-2 290 670**
**AU-B-3 182 271**
**AU-B-5 501 873**
**DE-C- 860 031**
**GB-A- 991 759**
**GB-A-1 169 032**
**US-A-2 790 762**
**US-A-3 076 545**
**US-A-4 168 295**

(73) Proprietor: **JEWETT, Warren Read**
**2815 East Fort Lowell Road**
**Tucson, AZ 85716 (US)**
(73) Proprietor: **NORMAN, Joseph R.**
**110 Jersey Road**
**Woollahra, NSW 2025 (AU)**

(72) Inventor: **JEWETT, Warren Read**
**2815 East Fort Lowell Road**
**Tucson, AZ 85716 (US)**
Inventor: **NORMAN, Joseph R.**
**110 Jersey Road**
**Woollahra, NSW 2025 (AU)**

(74) Representative: **Pendlebury, Anthony et al**
**PAGE, WHITE & FARRER 54 Doughty Street**
**London WC1N 2LS (GB)**

Courier Press, Leamington Spa, England.

## Description

This invention relates to the art of chemical processing. More specifically, the invention is generally directed to the treatment of solid-solid multi-phase systems to enhance the separability of the individual phase(s).

Methods and apparatus for enhancing the separability of discontinuous and dispersed systems are of course known to the art.

AU—B—31822/71 discloses a screening machine in which a screening surface is subjected to vibrations of at least two frequencies whereby material on the screening surface is well loosened and highly accelerated and the screening effect is improved.

AU—B—55018/73 discloses a method and apparatus for improving the separability of a dispersed system comprising a continuous phase and a dispersed phase wherein the system is enclosed in a container which is subjected to one vibration, and plates are immersed in the system and subjected to a second vibration. A difference in frequency between the two vibrations sets up wave trains in the system which enhance the separability of the system.

In one aspect the present invention provides a method of treating a solid-solid multi-phase system to enhance the separability, without screening, of at least one phase comprising the steps of:

(i) establishing the multi-phase system upon a vibratory plate transducer means, and

(ii) subjecting the so established system to at least two vibratory disturbances which differ from one another so as to thereby form respective wave trains at different frequencies within the audio frequency range, and thus establish a beat frequency difference,

the said one solid phase being thereby separated from the other solid phase(s) as required.

Relatedly, the invention additionally provides apparatus for carrying out the method defined above. This apparatus comprises apparatus for carrying out the method of claim 1 comprising a vibratory plate transducer means and, in combination therewith, vibratory energy generating means whereby the transducer means is subjected to at lesat two vibratory disturbances which differ from one another so as to thereby form respective wave trains at different frequencies within the audio frequency range, and thus establish a beat frequency difference. Perferably the transducer means is a laminated vibratory platten.

The invention will now be sequentially described with particular reference to sub-generic performance features, accompanying drawings and a specific Example. It is to be understood that such ensuing description is illustrative of the invention and therefore should not be limitatively construed.

The invention can be utilised to separate ground solids, such as ores, the solids being positioned upon the vibratory plate transducer means. The vibratory plate transducer means is substantially horizontally disposed and drivably connected to appropriate vibratory energy generating means. The plate may be of any material able to transmit vibrations; specifically it may be of laminated metallic or of other material (e.g. rubber, plastics) suitable for the carriage of ground solids, the vibratory energy being conveniently transmitted to the said plate at two or more points thereon. Being thus differentially vibrated, the plate is thereby subjected to a controlled beat frequency difference whereby material passing across or resting upon the plate is separated into distinct streams or collections of particles. When a particular component is to be separated, it will be found that, compared with the original unseparated material, it is at a higher concentration in one stream, and at a lower concentration in the other stream.

The vibratory energy generating means, which subjects the system to at least two vibratory disturbances as indicated above, may be an electric, hydraulic or pneumatic motor (e.g. a variable speed electric motor)—or may be any other type of energy generating means such as a sonic wave generator. The wave trains may conveniently be at frequencies below 10000 cycles per second, such as 100—1000 cycles per second (for convenience, simple designated as cps hereafter). Beat frequency differences are conveniently of the order of 2 to 200 cps, preferably 4 to 30 cps. A so-established beat frequency difference will enhance the separation of the phases of the system—as will be demonstrated in the ensuing specific example.

Referring now to the drawings:

Figure 1 is a diagrammatic side view of one apparatus of, and employed in accordance with the method of, the invention.

Figure 2 is a partially diagrammatic perspective view of the apparatus of Figure 1.

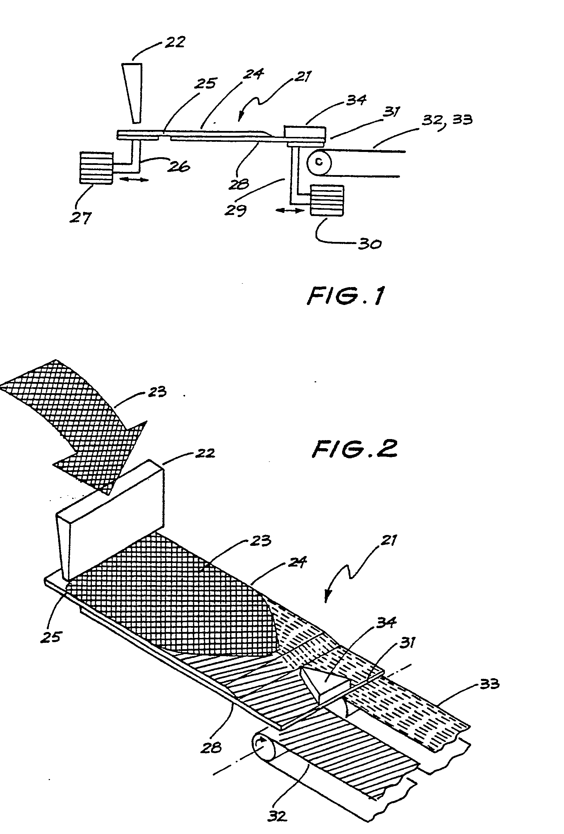

In Figures 1 and 2, the apparatus is generally designated by the numeral 21 and includes a loading hopper 22 for the transmission of solid particulate material (e.g. a mixture of solids) onto a platten 24 (i.e. the transducer means). The platten is a horizontally disposed laminate of elastic material such as fabric reinforced butyl rubber. The upper of the two laminate sections, 25, is affixed via a mechanical connection 26 to a vibratory energy generating means 27 (designated "vibrator" hereafter). In like manner, the lower laminate section 28 is affixed via a mechanical connection 29 to a vibrator 30. The vibrators 27 and 30 may be driven, as indicated hereafter, at frequencies and amplitudes determined as those appropriate for the physical separation of two or more of the constituents of the particulate mixture. The arrows indicate direction of motion. Frequencies may be in the range 100—1000 cps—and a beat frequency difference between vibrators of 4 to 30 cps is maintained.

The platten 24 is pitched downwardly a few degrees towards end 31 (i.e. it has a slight tilt in the direction of flow) as illustrated. Mounted beneath are transversely spaced conveyor belts 32 and 33 for removal of the separated components of the material. Septum 34 aids in maintaining division between the separated particulates—and may be positioned to either side dependent upon the proportionality of materials in the particulate streams.

As indicated heretofore, the vibratory energy generating means (vibrators) may be of various types. Typically, the vibrators of the foregoing apparatus may be magnetic-type drivers which are capable of converting electrical energy into vibratory energy—for transmission to the vibratory surfaces. The electrical energy is transmitted to the magnetic drivers from variable signal generators via separate power amplifiers.

Proceeding to Example 1 the separation of a ground solid-multi-phase system is now demonstrated.

Example 1
A ground mixture of iron (100 mesh) and silica (30 mesh) was treated, utilizing the apparatus illustrated in Figure 1. The mixture, designated by the numeral 23 in Figure 2, consisted of equal weights of iron and silica, the molecular proportion of the mixture components being 26% iron and 74% silica. As indicated heretofore, the platten 24 was substantially horizontally disposed, with a slight tilt in the direction of flow (as illustrated).

To effect the separation, the upper section 25 was vibrated at 145 cps by the vibrator 27 (i.e. the one at the left-hand end as illustrated) and the lower section was vibrated at 150 cps by vibrator 20 thereby establishing a controlled beat frequency difference of 5 cps. The mixture was found to separate into two fractions, a silica rich fraction which analysed at 5% Fe and 95% $SiO_2$, and an iron rich fraction which analysed at 70% Fe and 30% $SiO_2$.

In summary, there is provided, by the invention, a treatment technique whereby solid-solid multi-phase systems can be efficaciously separated. It is reiterated that matters of performance as set forth heretofore can be adjusted as required. As long as the basic criteria of the invention are observed, all such matters are to be regarded as variable in accordance with situational requirements.

The present invention represents a substantive development of the art in respect of solid-solid systems and how they are separated. Thus the invention contemplates the treatment of ores and the like by utilization of the said instant separation treatment. A substantive contribution to the art has thus been made.

## Claims

1. A method of treating a solid-solid multi-phase system to enhance the separability, without screening, of at least one phase comprising the steps of:
(i) establishing the multi-phase system upon a vibratory plate transducer means, and
(ii) subjecting the so established system to at least two vibratory disturbances which differ from one another so as to thereby form respective wave trains at different frequencies within the audio frequency range, and thus establish a beat frequency difference,
the said one solid phase being thereby separated from the other solid phase(s) as required.

2. A method as claimed in claim 1 in which the system is a two-phase system.

3. A method as claimed in claim 1 or 2 in which the wave trains are each at frequencies below 10000 cps.

4. A method of claimed in claim 3 in which the wave trains are each a frequencies in the range 100—1000 cps.

5. A method as claimed in claim 3 in which the beat frequency difference is of the order of 2—200 cps.

6. A method as claimed in claim 5 in which the beat frequency difference is in the range 4—30 cps.

7. Apparatus for carrying out the method of claim 1 comprising a vibratory plate transducer means and, in combination therewith, vibratory energy generating means whereby the transducer means is subjected to at least two vibratory disturbances which differ from one another so as to thereby form respective wave trains at different frequencies within the audio frequency range, and thus establish a beat frequency difference.

8. Apparatus as claimed in claim 7 wherein the transducer means is a laminated vibratory platten.

## Patentansprüche

1. Verfahren zur Behandlung eines Fest-Fest-Mehrphasensystems zur Verbesserung der Abtrennbarkeit wenigstens einer Phase ohne Sieben, wobei:
(i) das Mehrphasensystem auf einen Schwingplatten-Aufnehmer aufgebracht wird und
(ii) das so aufgebrachte System mindestens zwei Schwingstörungen unterworfen wird, die sich derart voneinander unterscheiden, daß dadurch jeweils Wellenzüge mit unterschiedlichen Frequenzen innerhalb des Hörfrequenzbereiches ausgebildet werden und dadurch eine Schwebungsfrequenzdifferenz erzeugt wird,
wodurch die genannte eine feste Phase von der (den) anderen Phase(n) in der erforderlichen Weise getrennt wird.

2. Verfahren nach Anspruch 1, bei welchem das System ein Zweiphasensystem ist.

3. Verfahren nach Anspruch 1 oder 2, bei welchem die Wellenzüge jeweils bei Frequenzen unterhalb 10000 Hz liegen.

4. Verfahren nach Anspruch 3, bei welchem die Wellenzüge jeweils bei Frequenzen im Bereich von 100 bis 1000 Hz liegen.

5. Verfahren nach Anspruch 3, bei welchem die Schwebungsfrequenzdifferenz in der Größenordnung von 2 bis 200 Hz liegt.

6. Verfahren nach Anspruch 5, bei welchem die Schwebungsfrequenzdifferenz im Bereich von 4 bis 30 Hz liegt.

7. Vorrichtung zur Durchführung des Verfahrens nach Anspruch 1, mit einem Schwingplatten-Aufnehmer und in Kombination damit einer Einrichtung zur Erzeugung von Schwingungsenergie, wodurch der Aufnehmer wenigstens zwei Schwingungsstörungen unterworfen wird, die sich voneinander derart unterscheiden, daß dadurch jeweils Wellenzüge mit verschiedenen Frequenzen innerhlab des Hörfrequenzbereichs ausgebildet und dadurch eine Schwebungsfrequenzdifferenz erzeugt wird.

8. Vorrichtung nach Anspruch 7, worin der Aufnehmer eine geschichtete Schwingplatte ist.

**Revendications**

1. Procédé de traitement d'un système multiphase solide-solide, pour améliorer la séparabilité, sans tamisage, d'au moins une phase particulière, comportant les étapes de:

(1) disposer le système multiphase sur un moyen transducteur à plaque vibrante, et

(2) soumettre le système ainsi disposé à au moins deux ébranlements vibratoires qui diffèrent l'un de l'autre en sorte de former de ce fait des trains d'ondes respectifs à différentes fréquences à l'intérieur de la gamme des audiofréquences et ainsi une différence de fréquence de battement, ladite phase particulière étant de la sorte séparée de l'autre ou des autres phases solides, comme requis.

2. Procédé suivant la revendication 1 où le système est un système à deux phases.

3. Procédé ouvrant la revendication 1 ou 2, où des trains d'onde sont chacun à fréquence en-dessous de 10.000 cps (hertz).

4. Procédé suivant la revendication 3, où les trains d'onde sont chacun à fréquence dans la gamme 100—1000 cps (hertz).

5. Procédé suivant la revendication 3, où la différence de fréquence de battement est de l'ordre de 2—200 cps (hertz).

6. Procédé suivant la revendication 5, où la différence de fréquence de battement est dans la gamme 4—30 cps (hertz).

7. Appareil pour la mise en oeuvre du procédé suivant la revendication 1, comportant un moyen transducteur à plaque vibrante et, en combinaison avec celui-ci un moyen générateur d'énergie vibratoire par qui le moyen transducteur est soumis à au moins deux ébranlements vibratoires qui diffèrent l'un de l'autre en sorte de former, de ce fait, des trains d'onde respectifs à des fréquences différentes à l'intérieur de la gamme d'audiofréquences et ainsi établir une différence de fréquence de battement.

8. Appareil selon la revendication 7, où le moyen transducteur est une platine vibrante feuilletée.

FIG.1

FIG.2

1